# EUROPÄISCHE PATENTSCHRIFT

(11) **EP 0 548 004 B1**
(45) Veröffentlichungstag und Bekanntmachung des Hinweises auf die Patenterteilung: **23.08.1995**
(21) Anmeldenummer: 92810677.2
(22) Anmeldetag: 03.09.1992
(51) Int. Cl.: H01M 2/34, H01M 2/10, H02J 7/00

(54) **Kontaktierung eines Akkus**
Battery contact
Contact d'une pile

(30) Priorität: 23.11.1991 DE 4138598
(43) Veröffentlichungstag der Anmeldung: 23.06.1993
(73) Patentinhaber: HILTI Aktiengesellschaft, 9494 Schaan (LI)
(72) Erfinder: Millauer, Wolfgang, W-8000 München 60 (DE); Spieth, Manfred, W-8033 Martingsried (DE)
(74) Vertreter: Wildi, Roland

(56) Entgegenhaltungen:
- DE-A- 1 496 311
- US-A- 3 967 979

## Beschreibung

Die Erfindung betrifft einen Akkumulator mit einem Kupplungsteil, das am Umfang wenigstens ein Plus-Minus-Kontaktpaar trägt.

Es sind Elektrowerkzeuge bekannt, die mit Gleichstrom-Antriebsmotoren ausgerüstet sind, wobei die Antriebsenergie in Akkumulatoren gespeichert ist. Diese aus mehreren Einzelzellen bestehenden Akkumulatoren können mit dem Gehäuse des Elektrowerkzeuges verbunden werden. Die elektrische Verbindung des Akkumulators mit dem Elektrowerkzeug erfolgt mittels geeigneter Kupplungsteile. Der mechanischen Halterung des Akkumulators am Elektrowerkzeug dienen Klemm-, Verriegelungs- oder Rastelemente.

Aus der US-PS 4 576 880 ist ein Akkumulator bekannt, in dem mehrere Einzelzellen seriell miteinander verbunden sind. Durch diese Anordnung wird eine Akkumulatorspannung erreicht, die der Summe der Spannungen aller Einzelzellen entspricht. Die miteinander verbundenen Einzelzellen sind mit einem im stirnseitigen Bereich des Akkumulators angeordneten, von aussen abgreifbaren Plus-Minus-Kontaktpaar verbunden.

Damit dieser bekannte Akkumulator jeweils nur mit Elektrowerkzeugen mit der gleichen Akkumulatorspannung bzw mit den richtigen Polen in Verbindung gebracht werden kann, ist im Kupplungsteil eine mechanische Codiereinrichtung angeordnet. Zwei einander gegenüberliegend am Gehäuse des Akkumulators angeordnete Federn sollen eine falsche Kontaktierung des Plus-Minus-Kontaktpaare sowohl mit dem Elektrowerkzeug als auch mit dem Ladegerät verhindern.

Sehr weit verbreitete Codiereinrichtungen bestehen aus einer oder mehreren am Kupplungsteil des Elektrowerkzeuges bzw Ladegerätes angeordneten Federn, die in eine oder mehrere am Kupplungsteil des Akkumulators angeordnete Nuten eingreifen. Es gibt auch Codiereinrichtungen, bei denen der Akkumulator wenigstens eine Feder aufweist, die in wenigstens eine Nut am Elektrowerkzeug bzw am Ladegerät eingreift. Durch die Codiereinrichtungen soll die Verwendung falscher Akkumulatoren verhindert werden.

Nachteilig bei am Gehäuse des Akkumulators angeordneten Plus-Minus-Kontaktpaaren wirkt sich der Umstand aus, dass es verschiedene Hersteller gibt, die Akkumulatoren anbieten, deren Gehäuse sich in bezug auf die Form und den Gehäusequerschnitt derart gleichen, dass sie mit Elektrowerkzeugen bzw Ladegeräten anderer Hersteller in Verbindung gebracht werden können. Sie unterscheiden sich aber dadurch, dass sie teilweise unterschiedlich gepolt sind.

Wenn die Pole des Plus-Minus-Kontaktpaares des Akkumulators gegenüber den am Elektrowerkzeug bzw am Ladegerät angeordneten Polen des Plus-Minus-Kontaktpaares vertauscht sind, kann dies zu einer Beschädigung des Akkumulators, des Ladegerätes oder des Elektrowerkzeuges führen. Ein beschädigter Akkumulator kann nicht mehr aufgeladen werden. Im schlimmsten Fall kann der Akkumulator bei einem Kurzschluss explodieren.

Der Erfindung liegt die Aufgabe zugrunde, einen Akkumulator zu schaffen, dessen Kontaktanordnung so gewählt ist, dass eine falsche Kontaktierung mit dem Ladegerät oder dem Elektrowerkzeug ausgeschlossen ist und damit die Sicherheit des Handwerkers gewährleistet wird.

Erfindungsgemäss wird dies dadurch erreicht, dass die Querschnittsfläche des Kupplungsteiles in punktsymmetrisch gleiche Teilflächen unterteilbar ist und innerhalb wenigstens einer Teilfläche ein Plus-Minus-Kontaktpaar vorgesehen ist.

Durch die Anordnung des Plus-Minus-Kontaktpaares in einer Teilfläche kann keine Fehlkontaktierung stattfinden, wenn der Akkumulator um 180° in Umfangsrichtung verdreht mit dem Ladegerät bzw. mit dem Elektrowerkzeug in Verbindung gebracht wird.

Vorzugsweise zeichnet sich der Akkumulator dadurch aus, dass wenigstens zwei Teilflächen je ein einander punktsymmetrisch gegenüberliegendes Plus-Minus-Kontaktpaar aufweisen. Die im Innern des Akkumulators angeordneten Akkumulatorzellen sind normalerweise seriell hintereinander angeordnet und miteinander leitend verbunden. Durch die Anordnung mehrerer Plus-Minus -Kontaktpaare können die in dem Akkumulator angeordneten Akkumulatorzellen in mehrere einzelne Blöcke aufgeteilt werden, wobei jeder Block einem von aussen am Gehäuse im Bereich des Kupplungsteiles abgreifbaren Plus-Minus-Kontaktpaar zugeordnet ist.

Diese Blöcke können verschiedenartig ausgebildet sein. Die Anzahl der in den einzelnen Blöcken angeordneten Einzelzellen kann unterschiedlich hoch sein. Dadurch sind bei den entsprechenden Plus-Minus-Kontaktpaaren unterschiedlich hohe Spannungen abgreifbar.

Eine andere Möglichkeit besteht darin, dass die Anzahl der Einzelzellen in den einzelnen Blöcken gleich hoch ist. Beim Einsatz eines solchen Akkumulators in einem Elektrowerkzeug kann die Regelelektronik die Energie der einzelnen Blöcke nacheinander abarbeiten. Weist ein Akkumulator zB zwei Blöcke mit jeweils 12 Volt Spannung auf, so kann deren Energie mit Hilfe einer internen im Elektrowerkzeug eingebauten Regelelektronik auf zwei verschiedene Arten abgearbeitet werden.

Durch die Parallelschaltung beider Blöcke steht für den Antrieb eines Elektrowerkzeuges eine Spannung von 12 V bei doppelter Kapazität zur Verfügung. Das bedeutet, dass das Elektrowerkzeug gegenüber einem einzelnen Block mit 12 V doppelt so lange betrieben werden kann.

Durch die serielle Verbindung der Blöcke wird eine Spannung erreicht, die der Summe der Spannungen aller Blöcke entspricht. In Bezug auf das Beispiel, bei dem innerhalb eines Akkumulators zwei Blöcke mit jeweils 12 V angeordnet sind, kann auf diese Weise ein Elektrowerkzeug mit einer Spannung von 24 V angetrieben werden.

Vorteilhafterweise sind die Kontakte zweier Plus-Minus-Kontaktpaare in bezug auf die gleich grosse Teilflächen bildende Flächenhalbierung und in bezug auf die senkrecht zur Flächenhalbierenden, durch den Flächenschwerpunkt der Teilflächen verlaufenden Geraden symmetrisch angeordnet.

Aufgrund der symmetrischen Anordnung der Plus-Minus-Kontaktpaare kann im Innern des Akkumulators die Verdrahtung der einzelnen Blöcke mit den zugeordneten Plus-Minus-Kontaktpaaren gleichartig erfolgen. Dies sind wesentliche fertigungstechnische Vorteile, die sich auf die Wirtschaftlichkeit der Herstellung des Akkumulators auswirken.

Das Ladegerät für den Akkumulator weist vorzugsweise ein Kupplungsteil auf, wobei die Querschnittsfläche des Kupplungsteiles vorzugsweise in punktsymmetrisch gleiche Teilflächen unterteilbar ist und innerhalb wenigstens einer der Teilfläche ein Plus-Minus-Kontaktpaar vorgesehen ist.

Durch die Anordnung des Plus-Minus-Kontaktpaares in einer Teilfläche muss beim Einstecken eines Akkumulators in das Ladegerät nicht darauf geachtet werden, wie der Akkumulator ausgerichtet ist. Da das Plus-Minus-Kontaktpaar nur in einer Teilfläche angeordnet ist, kann keine Fehlkontaktierung erfolgen.

Das Ladegerät zeichnet sich zweckmässigerweise dadurch aus, dass wenigstens zwei Teilflächen je ein einander punktsymmetrisch gegenüberliegendes Plus-Minus-Kontaktpaar aufweisen.

Durch die punktsymmetrische Anordnung der Plus-Minus-Kontaktpaare ist es möglich, einen aus wenigstens einem Block bestehenden Akkumulator aufzuladen. Ein derartiges Ladegerät das auf 12 V-Ladespannung ausgelegt ist, weist die Vorteile auf, dass es aufgrund der preisgünstigen Bauteile wirtschaftlicher herstellbar ist und dass geringere Spannungsfestigkeitsanforderungen an die aktiven Bauteile des Ladegerätes gestellt werden.

Die Aufladung der einzelnen Blöcke des Akkumulators erfolgt nacheinander. Handelt es sich um ein Ladegerät mit nur einem Plus-Minus-Kontaktpaar, so muss der Akkumulator zwischen den Ladevorgängen aus dem Ladeschacht herausgenommen bzw von dem Kupplungsteil des Ladegerätes getrennt und in Umfangsrichtung so weit gedreht werden, bis das nächste Plus-Minus-Kontaktpaar des Akkumulators gegenüber dem Plus-Minus-Kontaktpaar des Ladegerätes ausgerichtet ist. Anschliessend wird der Akkumulator wieder mit dem Ladegerät verbunden. Ist der Ladevorgang eines Blockes abgeschlossen, kann dies jeweils durch ein Signal angezeigt werden.

Bei sogenannten Schnelladegeräten ist die punktsymmetrische Anordnung der Plus-Minus-Kontaktpaare vorteilhaft, da bei einem Ladegerät mit mehreren Plus-Minus-Kontaktpaaren, an denen jeweils 12 V Ladespannung nacheinander anliegt, nicht darauf geachtet werden muss, wie der Akkumulator in den Ladeschacht eingesetzt wird. Eine Kontaktierung ist in jedem Fall gewährleistet.

Zweckmässigerweise zeichnet sich das Ladegerät dadurch aus, dass die Kontakte zweier Plus-Minus-Kontaktpaare in bezug auf die gleich grosse Teilflächen bildende Flächenhalbierende und die senkrecht zur Flächenhalbierenden stehenden, durch den Flächenschwerpunkt der Teilflächen verlaufenden Geraden symmetrisch angeordnet sind.

Aus fertigungstechnischen Gründen, die sich auf die Herstellung des Kupplungsteiles des Ladegerätes beziehen, ist die oben erwähnte symmetrische Anordnung der Plus-Minus-Kontaktpaare vorzuziehen. Dadurch entstehen gleichmässigere bzw. gleichmässiger verteilte Spannungen während der Bearbeitung.

In bezug auf die Dauer der Aufladung gleich starker Akkumulatoren gibt es im wesentlichen zwei unterschiedliche Ladegeräte. Das "Normal"-Ladegerät unterscheidet sich von dem "Schnell"-Ladegerät durch eine 6-fach längere Aufladezeit. Dieses "Normal"-Ladegerät ist durch die verwendeten einfacheren elektrischen Bauteile preisgünstiger herstellbar.

Die Akkumulatoren, die sich für den Aufladevorgang in einem "Schnell"-Ladegerät eignen, weisen einen anderen chemischen Aufbau, im Gegensatz zu den in "Normal"-Ladegeräten vewendeten Akkumulatoren, auf. Würde man einen für ein "Normal"-Ladegerät geeigneten Akkumulator in ein "Schnell"-Ladegerät einsetzen, so würde dies zu einer Beschädigung bzw. zu einer Explosion dieses Akkumulators führen.

Damit dies verhindert werden kann, besteht die Möglichkeit, am Akkumulator im Bereich des Kupplungsteiles eine Sperreinrichtung anzubringen, die das Einsetzen des für "Normal"-Ladegeräte geeigneten Akkumulators in das "Schnell"-Ladegerät verhindert.

Damit der Akkumulator aber in das "Normal"-Ladegerät eingesetzt werden kann, muss dieses eine die Sperreinrichtung aufnehmende Ausnehmung aufweisen. Durch diese Massnahme wird das Einsetzen eines Akkumulators für "Schnell"-Ladegeräte in das "Normal"-Ladegerät nicht behindert.

Die Erfindung wird nachstehend anhand von Zeichnungen, die mehrere Ausführungsbeispiele näher zeigen, erläutert. Es zeigen:
- Fig. 1: einen Akkumulator mit zwei Plus-Minus-Kontaktpaaren;
- Fig. 2: einen Schnitt durch den Akkumulator gemäss Fig. 1 entlang der Linie II-II;
- Fig. 3: eine Draufsicht auf ein Ladegerät, dessen Ladeschacht zwei Plus-Minus-Kontaktpaare aufweist.
- Fig. 4: einen Schnitt entsprechend Schnittverlauf der Fig. 1 durch einen Akkumulator mit einem Plus-Minus-Kontaktpaar;
- Fig. 5: eine Draufsicht auf ein Ladegerät, dessen Ladeschacht ein Plus-Minus-Kontaktpaar aufweist;

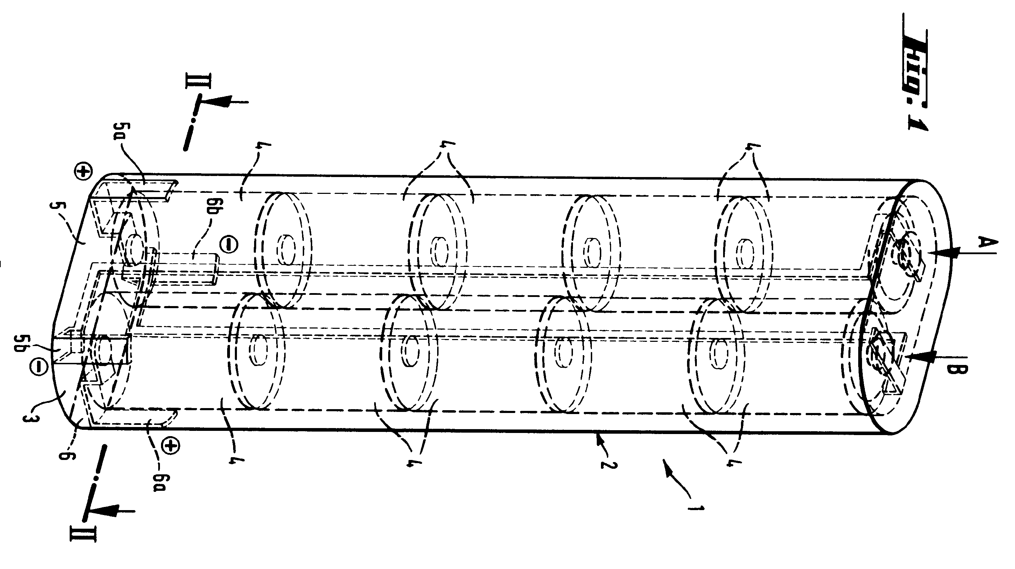

In der Fig. 1 ist ein Akkumulator 1 dargestellt, der zwei Blöcke A, B aufweist, wobei in jedem Block jeweils fünf seriell leitend miteinander verbundene Einzelzellen 4 angeordnet sind. Das Gehäuse 2 des Akkumulators 1 ist an einem Ende als Kupplungsteil 3 ausgebildet. Am Kupplungsteil 3 sind zwei von aussen abgreifbare, jeweils mit den Blöcken A, B in Verbindung stehende Plus-Minus-Kontaktpaare 5a, 5b, 6a, 6b angeordnet.

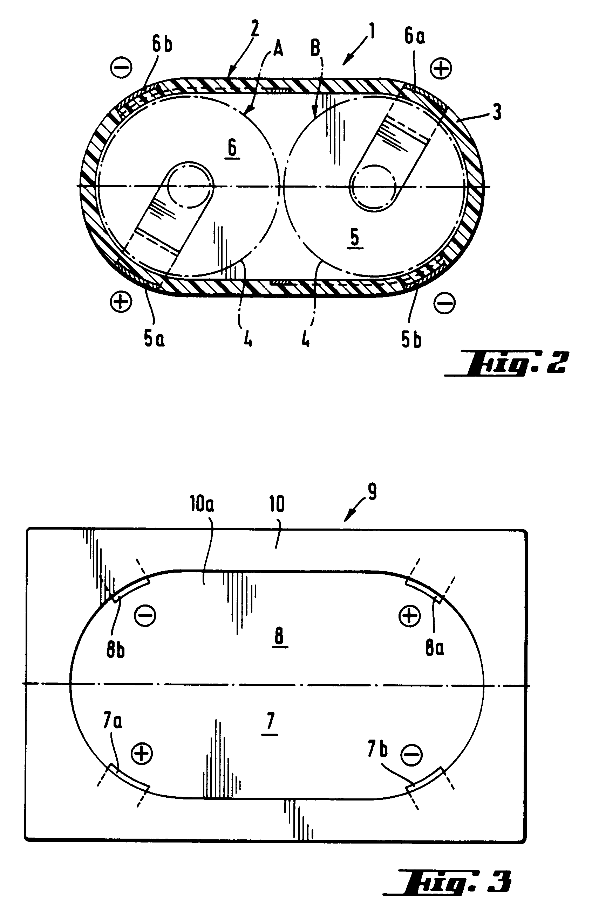

Fig. 2 zeigt einen Akkumulator 1 mit zwei einander punktsymmetrisch gegenüberliegenden Plus-Minus-Kontaktpaaren 5a, 5b, 6a, 6b, wobei jedes Plus-Minus-Kontaktpaar 5a, 5b, 6a, 6b in einer Teilfläche 5, 6 der Querschnittsfläche angeordnet ist. Die Anzahl der Einzelzellen 4 in den einzelnen Blöcken A, B kann gleich oder unterschiedlich sein. In beiden Fällen beträgt die Summe der Spannungen der Blöcke A, B der Spannung des Akkumulators 1.

Als Beispiel sei ein Akkumulator genannt, der aus zwei 12 V-Blöcken besteht. Mit einem derartigen Akkumulator können Elektrowerkzeuge betrieben werden, die auf 12 oder 24 V ausgelegt sind.

Durch eine interne, im Elektrowerkzeug untergebrachte Regelelektronik kann eine serielle Abarbeitung der Ladeenergie erfolgen. Es steht somit eine Spannung von 24 V zur Verfügung. Mittels einer Parallelschaltung beider Blöcke steht eine Spannung von 12 V bei doppelter Kapazität zur Verfügung.

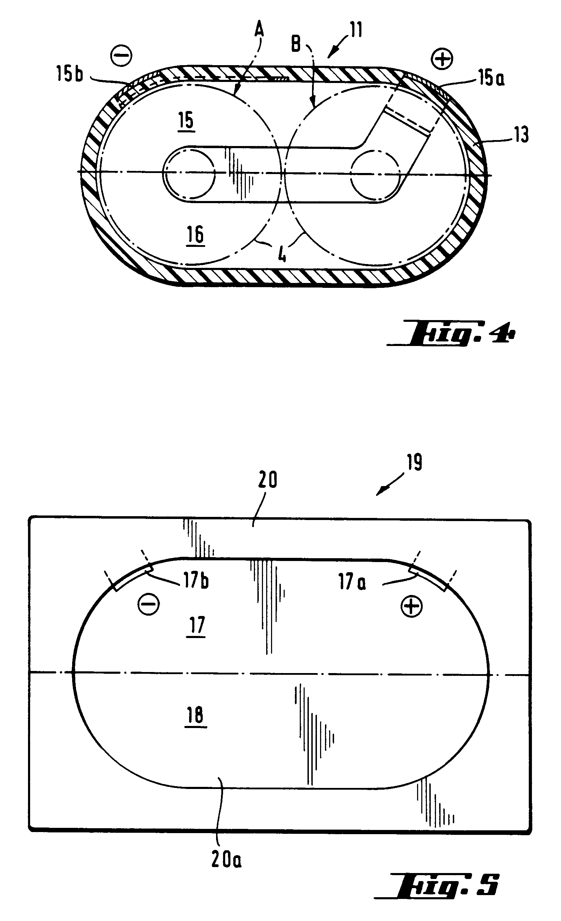

In der Fig. 3 ist der Ladeschacht eines Ladegerätes 9 mit dem Kupplungsteil 10a erkennbar, dessen Querschnittsfläche in zwei punktsymmetrisch gleiche Teilflächen 7, 8 unterteilt ist, wobei in jeder Teilfläche 7, 8 ein Plus-Minus-Kontaktpaar 7a, 7b, 8a, 8b angeordnet ist. Das für den Ladevorgang notwendige Ladegerät 9 kann somit auf eine Spannung von 12 V ausgelegt werden. Aufgrund der geringen Ladespannung von 12 V, können die entsprechenden Bauteile im Ladegerät 9 auf 12 V ausgelegt werden. Das Ladegerät 9 ist somit wirtschaftlicher herstellbar, da die einzelnen Komponenten erheblich billiger sind, als die Komponenten für ein Ladegerät 9, das auf eine Ladespannung von 24 V ausgelegt ist.

Ist der Ladevorgang eines 12 V-Blockes A mittels eines 12 V-Ladegerätes 9 abgeschlossen, so wird anschliessend der nächste 12 V-Block B aufgeladen.

Mit einem Signalgeber beispielsweise in Form einer Lampe oder eines Tonsignales kann der abgeschlossene Ladevorgang des ersten Blocks A angezeigt werden. Durch manuelles Verdrehen des Akkumulators in Umfangsrichtung kann anschliessend der nächste Block B aufgeladen werden.

Das Ladegerät 9 kann auch so ausgebildet sein, dass im Gehäuse 10 im Bereich des Kupplungsteiles 10a Plus-Minus-Kontaktpaare 7a, 7b, 8a, 8b angeordnet sind, deren Anzahl gleich der Anzahl der am Gehäuse 2 des Akkumulators 1 angeordneten Plus-Minus-Kontaktpaare 5a, 5b, 6a, 6b entsprechen. Bei diesem etwas aufwendiger gestalteten Ladegerät 9 ist es nicht mehr notwendig, den Akkumulator 1 manuell in Umfangsrichtung zu verdrehen. Mittels einer internen Ladeelektronik werden die mit den einzelnen Plus-Minus-Kontaktpaaren 5a, 5b, 6a, 6b in Verbindung stehenden Blöcke A, B nacheinander aufgeladen.

Auf diese Weise kann zB auch ein nicht dargestellter 24 Volt-Akkumulator in drei Blöcke aufgeteilt werden, so dass das Ladegerät nur auf eine Ladespannung von 8 Volt ausgelegt werden muss. Durch eine entsprechende Serielschaltung der einzelnen Blöcke im Elektrowerkzeug steht eine Spannung von 24 Volt zur Verfügung.

In der Fig. 4 ist die in punktsymmetrisch gleiche Teilflächen 15, 16 unterteilte Querschnittsfläche des Kupplungsteiles 13 eines Akkumulators 11, der ein Plus-Minus-Kontaktpaar 15a, 15b aufweist dargestellt. Das Plus-Minus-Kontaktpaar 15a, 15b ist in der Teilfläche 15 angeordnet. Jede Einzelzelle des Akkumulators 11 hat beim Einsatz in Elektrowerkzeugen eine Energie von 1,2 bis 4 Ah und eine Spannung von ca. 1,2 Volt.

In Fig. 5 ist der Ladeschacht eines Ladegerätes 19 mit dem Kupplungsteil 20a erkennbar, dessen Querschnittsfläche ebenfalls in zwei punktsymmetrisch gleiche Teilflächen 17, 18 unterteilt ist, wobei in einer der Teilflächen 17 ein Plus-Minus-Kontaktpaar 17a, 17b angeordnet ist. Das Ladegerät 19 weist ein Gehäuse 20, mit hoher Standfestigkeit auf.

Zur Erzeugung einer Gleichspannung als Versorgungsspannung weist das Ladegerät 9 ein Netzteil mit Transformator- und Gleichrichterteil auf.

## Patentansprüche

1. Akkumulator mit einem Kupplungsteil (3, 13), das am Umfang wenigstens ein Plus-Minus-Kontaktpaar (5a, 5b, 6a, 6b, 15a, 15b) trägt, **dadurch gekennzeichnet,** dass die Querschnittsfläche des Kupplungsteiles (3, 13) in punktsymmetrisch gleiche Teilflächen (5, 6, 15, 16) unterteilbar ist und innerhalb wenigstens einer Teilfläche (5, 6, 15, 16) ein Plus-Minus-Kontaktpaar (5a, 5b, 6a, 6b, 15a, 15b) vorgesehen ist.

2. Akkumulator nach Anspruch 1, dadurch gekennzeichnet, dass wenigstens zwei Teilflächen (5, 6) je ein einander punktsymmetrisch gegenüberliegendes Plus-Minus-Kontaktpaar (5a, 5b, 6a, 6b) aufweisen.

3. Akkumulator nach Anspruch 2, dadurch gekennzeichnet, dass die Kontakte zweier Plus-Minus-Kontaktpaare (5a, 5b, 6a, 6b) in bezug auf die gleich grosse Teilflächen (5, 6) bildende Flächenhalbierende und in bezug auf die senkrecht zur Flächenhalbierenden, durch den Flächenschwerpunkt der Teilflächen (5, 6) verlaufenden Geraden symmetrisch angeordnet sind.

4. Ladegerät für Akkumulator nach einem der Ansprüche 1 bis 3, mit einem Kupplungsteil (10a, 20a), dadurch gekennzeichnet, dass die Querschnittsfläche des Kupplungsteiles (10a, 20a) in punktsymmetrisch gleiche Teilflächen (7, 8, 17, 18) unterteilbar ist und innerhalb wenigstens einer Teilfläche (7, 8, 17, 18) ein Plus-Minus-Kontaktpaar (7a, 7b, 8a, 8b, 17a, 17b) vorgesehen ist.

5. Ladegerät nach Anspruch 4, dadurch gekennzeichnet, dass wenigstens zwei Teilflächen (7, 8) je ein einander punktsymmetrisch gegenüberliegendes Plus-Minus-Kontaktpaar (7a, 7b, 8a, 8b) aufweisen.

6. Ladegerät nach Anspruch 5, dadurch gekennzeichnet, dass die Kontakte zweier Plus-Minus-Kontaktpaare (7a, 7b, 8a, 8b) in bezug auf die gleich grosse Teilflächen (7, 8) bildende Flächenhalbierende und die senkrecht zur Flächenhalbierenden stehende, durch den Flächenschwerpunkt der Teilflächen (7, 8) verlaufenden Geraden symmetrisch angeordnet sind.

## Claims

1. A storage battery having a coupling part (3, 13) which bears at least one plus and minus contact pair (5a, 5b, 6a, 6b, 15a, 15b) at its periphery, characterised in that the cross-sectional area of the coupling part (3, 13) can be subdivided into equal, centrosymmetrical partial areas (5, 6, 15, 16) and a plus and minus contact pair (5a, 5b, 6a, 6b, 15a, 15b) is provided within at least one partial area (5, 6, 15, 16).

2. A storage battery according to claim 1, characterised in that at least two partial areas (5, 6) each have a plus and minus contact pair (5a, 5b, 6a, 6b) situated centrosymmetrically opposite each other.

3. A storage battery according to claim 2, characterised in that the contacts of two plus and minus contact pairs (5a, 5b, 6a, 6b) are symmetrically disposed with respect to the area bisecting line forming the partial areas (5, 6) of equal size and with respect to the straight line perpendicular to the area bisecting line and passing through the centroid of the partial areas (5, 6).

4. A charging device for a storage battery according to any one of claims 1 to 3, having a coupling part (10a, 20a), characterised in that the cross-section area of the coupling part (10a, 20a) can be subdivided into equal, centrosymmetrical partial areas (7, 8, 17, 18) and a plus and minus contact pair (7a, 7b, 8a, 8b, 17a, 17b) is provided within at least one partial area (7, 8, 17, 18).

5. A charging device according to claim 4, characterised in that at least two partial areas (7, 8) each have a plus and minus contact pair (7a, 7b, 8a, 8b) situated centrosymmetrically opposite each other.

6. A charging device according to claim 5, characterised in that the contacts of two plus and minus contact pairs (7a, 7b, 8a, 8b) are symmetrically disposed with respect to the area bisecting line forming the partial areas (7, 8) of equal size and with respect to the straight line perpendicular to the area bisecting line and passing through the centroid of the partial areas (7, 8).

## Revendications

1. Pile avec un élément de couplage (3, 13) qui porte à la périphérie au moins une paire de contacts positif-négatif (5a, 5b, 6a, 6b, 15a, 15b), caractérisée en ce que l'aire de la section de l'élément de couplage (3, 13) peut être subdivisée en surfaces partielles (5, 6, 15, 16) égales à symétrie ponctuelle, et qu'au moins une paire de contacts positif-négatif (5a, 5b, 6a, 6b, 15a, 15b) est prévue dans au moins une surface partielle (5, 6, 15, 16).

2. Pile selon la revendication 1, caractérisée en ce qu'au moins deux surfaces partielles (5, 6) présentent respectivement une paire de contacts positif-négatif (5a, 5b, 6a, 6b) en regard opposée à symétrie ponctuelle.

3. Pile selon la revendication 2, caractérisée en ce que les contacts de deux paires de contacts positif-négatif (5a, 5b, 6a, 6b) sont disposés symétriquement par rapport à la bissectrice formant les surfaces partielles (5, 6) de mêmes dimensions et par rapport à la droite orientée perpendiculairement à la bissectrice des surfaces et passant par le centre de gravité des surfaces partielles (5, 6).

4. Chargeur pour une pile selon l'une des revendications 1 à 3, comprenant un élément de couplage (10a, 20a), caractérisé en ce que l'aire de la section de l'élément de couplage (10a, 20a) peut être subdivisée en surfaces partielles (7, 8, 17, 18) égales à symétrie ponctuelle, et qu'une paire de contacts positif-négatif (7a, 7b, 8a, 8b, 17a, 17b) est prévue dans au moins l'une des surfaces partielles (7, 8, 17, 18).

5. Chargeur selon la revendication 4, caractérisé en ce qu'au moins deux surfaces partielles (7, 8) présentent respectivement une paire de contacts positif-négatif (7a, 7b, 8a, 8b) en regard opposée à symétrie ponctuelle.

6. Chargeur selon la revendication 5, caractérisé en ce que les contacts de deux paires de contacts positif-négatif (7a, 7b, 8a, 8b) sont disposés symétriquement par rapport à la bissectrice formant les surfaces partielles (7, 8) de mêmes dimensions et par rapport à la droite orientée perpendiculairement à la bissectrice des surfaces et passant par le centre de gravité des surfaces partielles (7, 8).
